# EUROPEAN PATENT SPECIFICATION

(11) **EP 4 260 646 B1**
(45) Date of publication and mention of the grant of the patent: **15.10.2025**
(21) Application number: 20824198.4
(22) Date of filing: 09.12.2020
(51) Int. Cl.: H04W 76/15, H04W 72/541, H04W 52/34, H04W 52/26

(54) **SIMULTANEOUS TRANSMIT AND RECEIVE (STR) MULTI-LINK OPERATION**
MEHRFACHVERBINDUNGSBETRIEB FÜR GLEICHZEITIGES SENDEN UND EMPFANGEN (STR)
OPÉRATION SUR PLUSIEURS LIAISONS D'ÉMISSION ET DE RÉCEPTION SIMULTANÉES (STR)

(43) Date of publication of application: 18.10.2023
(73) Proprietor: Telefonaktiebolaget LM Ericsson (publ), 164 83 Stockholm (SE)
(72) Inventor: AMBEDE, Abhishek, 141 58 Huddinge (SE); WILHELMSSON, Leif, 222 20 Lund (SE); LOPEZ, Miguel, 52074 Aachen (DE)
(74) Representative: Ericsson
(86) International application number: PCT/EP2020/085331
(87) International publication number: WO 2022/122151

(56) References cited:
- US-A1- 2020 014 576
- US-A1- 2020 229 112

## Description

### TECHNICAL FIELD

The present disclosure relates to wireless communications and in particular, simultaneous transmit and receive (STR) multi-link operation according to e.g., the extremely high throughput (EHT) standard.

### BACKGROUND

The next-generation to the Institute of Electrical Engineers (IEEE) 802.11 wireless local area network (WLAN) standard, which is currently under development, is IEEE 802.11be (also termed as Extremely High Throughput 'EHT'). EHT introduces a new feature called multi-link (ML) operation, abbreviated MLO. In MLO, a device termed as multi-link device (MLD) has multiple affiliated stations (STAs), each of which can communicate using independent wireless channels (links). Communication over multiple links by an MLD is termed as multi-link operation (MLO). It should be noted that in the context of this disclosure, the terms 'channels' and 'links' are used interchangeably. For example, an MLD can have two affiliated STAs - one communicating using channels in the 5 GHz frequency band and the other communicating using channels in the 6 GHz frequency band. Alternatively, as another example, an MLD can have two affiliated STAs - each communicating using channels in the 6 GHz frequency band. In the context of this disclosure, an access point (AP) MLD denotes an MLD with two or more affiliated access point (AP) STAs, whereas a non-AP MLD denotes an MLD with two or more affiliated non-AP STAs.

An MLD may use its affiliated STAs and corresponding supported channels to perform simultaneous transmit (TX) MLOs, simultaneous receive (RX) MLOs, or simultaneous transmit and receive (STR) MLOs. This may improve the spectrum utilization, as compared to single-link (SL) devices for example, while also enhancing the system throughput and latency performance. Simultaneous TX and simultaneous RX MLOs may require that the involved links are synchronized at least to some extent, and thus, may be considered to impose a rather strict restriction on the operations. STR capability, on the other hand, may not impose such restrictions (and may permit asynchronous simultaneous TX and simultaneous RX MLOs). STR capability may therefore result in significantly better performance than synchronous simultaneous TX and simultaneous RX MLOs.

An MLD that can perform STR MLO is termed as a STR capable MLD. In the context of this disclosure, if the STAs affiliated with a STR capable MLD are AP STAs, the MLD is termed as STR capable AP MLD. Similarly, if the STAs affiliated with a STR capable MLD are non-AP STAs, the MLD is termed as STR capable non-AP MLD.

An MLD attempting to perform STR MLO may face severe challenges due to the self-interference (SI, or leakage) from its TX to RX channels. This is the challenge that is avoided in simultaneous TX and simultaneous RX operations by means of e.g., scheduling. In other words, the leakage power of the TX signal in the desired RX signal's channel can be orders of magnitude higher than the power of the desired RX signal, thereby affecting the reception/sensing ability of the RX chain in the MLD. If an MLD can perform simultaneous TX and RX on a supported pair of links, that pair of links may be classified as STR. However, if a TX operation on one link results in an inability to perform RX operation on another link (e.g., due to the leakage problem), that pair of links may be classified as non-STR. An MLD may be configured to announce its STR capability related to all applicable pairs of supported links. This may assist with setting up and executing a STR MLO.

However, dividing STR capability per pair of supported links in such a rigid, binary classification manner as either STR capable or non-STR capable may be inefficient.

In IEEE 802.11be task group (TGbe), it has been agreed that a non-AP MLD may update the classification of a pair of links from non-STR to STR after ML setup.

However, it is not clear how an STR capable MLD can use such pair of links for setting up and/or executing a STR MLO.

Other prior art examples are: US 2020/014576 A1 (CHERIAN GEORGE [US] ET AL) 9 January 2020; US 2020/229112 A1 (JOHN WILSON MAKESH PRAVIN [US] ET AL) 16 July 2020.

### SUMMARY

The scope of the present invention is defined in the appended independent claims. Specific embodiments of the present invention are defined in the dependent claims.

Some embodiments advantageously provide methods and apparatuses to support STR MLO.

According to independent claim 12, a simultaneous transmit and receive, STR, capable multi-link device, MLD, comprising an access point, AP, station, STA, is provided. The MLD comprises processing circuitry. The processing circuitry is configured to cause the MLD to select at least one communication parameter value for a pair of radio links to enable STR on the pair of radio links between the MLD and a second MLD, the second MLD comprising a non-access point, non-AP, STA, and the selected at least one communication parameter value comprising a value of at least one of: at least one first communication parameter for a first link in the pair and at least one second communication parameter for a second link in the pair.
In some embodiments of this aspect, the processing circuitry is further configured to cause the MLD to use the selected at least one communication parameter value to perform a multi-link operation, MLO, on the pair of radio links. In some embodiments of this aspect, the at least one communication parameter value comprises a value of at least one of: a transmit power for the first link in the pair of radio links; a transmit power for the second link in the pair of radio links; a modulation and coding scheme, MCS, for the first link; a MCS for the second link; and a signal bandwidth for at least one of the first link and the second link. In some embodiments of this aspect, the selection is based at least in part on at least one of: a data load in each link in the pair of radio links; an amount of self-interference caused by a transmission between the MLD and the second MLD for at least two different transmit powers; a relation between a signal bandwidth for the pair of links and a SI suppression value; and an amount of frequency separation between each link in the pair of links.

In some embodiments of this aspect, the processing circuitry is further configured to cause the MLD to obtain information about the pair of radio links, the information pertaining to at least one of the MLD's capabilities and the second MLD's capabilities for the pair of radio links. In some embodiments of this aspect, the obtained information is used to select the at least one communication parameter value to enable the STR on the pair of radio links. In some embodiments of this aspect, the processing circuitry is further configured to cause the MLD to modify the at least one communication parameter value based at least in part on the obtained information. In some embodiments of this aspect, the obtained information comprises at least one of a maximum transmit power value, a self-interference, SI, suppression value and a modulation and coding scheme, MCS, associated with the pair of radio links.

In some embodiments of this aspect, the processing circuitry is configured to cause the MLD to select by being configured to cause the MLD to select the at least one communication parameter value based at least in part on a comparison of the information pertaining to the MLD's capabilities to the information pertaining to the second MLD's capabilities in order to enable the STR on the pair of radio links. In some embodiments of this aspect, the processing circuitry is further configured to cause the MLD to request the information about the pair of radio links from the second MLD. In some embodiments of this aspect, the processing circuitry is further configured to cause the MLD to reclassify the pair of radio links from non-STR to STR based at least in part on the selection of the at least one communication parameter value. In some embodiments of this aspect, at least one of the pair of radio links is a STR constrained pair of links; and the pair of radio links is a pair of non-STR links for a first set of communication parameter values and the pair of radio links is a pair of STR links for a second set of communication parameter values, the first set being different from the second set.

In some embodiments of this aspect, the processing circuitry is configured to cause the MLD to: when a first link in the pair of radio links is associated with a first data load and a second link in the pair of radio links is associated with a second data load, the first data load being greater than the second data load: select the at least one communication parameter value by being configured to cause the MLD to select a first communication parameter value for the first link assuming no data load on the second link.

According to independent claim 14, a simultaneous transmit and receive, STR, capable multi-link device, MLD, comprising a non-access point, non-AP, station, STA, is provided. The MLD comprises processing circuitry. The processing circuitry is configured to cause the MLD to transmit information about a pair of radio links to a second MLD; and perform a multi-link operation, MLO, on the pair of radio links between the MLD and the second MLD, the pair of radio links using at least one communication parameter value, the at least one communication parameter value being based at least in part on the transmitted information and the at least one communication parameter value comprising a value of at least one of: at least one first communication parameter for a first link in the pair and at least one second communication parameter for a second link in the pair.

In some embodiments of this aspect, the at least one communication parameter value is based at least in part on the transmitted information to enable STR on the pair of radio links. In some embodiments of this aspect, the processing circuitry is further configured to cause the MLD to receive an indication of the at least one communication parameter value to use for the pair of radio links from the second MLD. In some embodiments of this aspect, the at least one communication parameter value comprises a value of at least one of: a transmit power for the first link in the pair of radio links; a transmit power for the second link in the pair of radio links; a modulation and coding scheme, MCS, for the first link; a MCS for the second link; and a signal bandwidth for at least one of the first link and the second link.

In some embodiments of this aspect, the at least one communication parameter value is based at least in part on at least one of: a data load in each link in the pair of radio links; an amount of self-interference caused by a transmission between the MLD and the second MLD for at least two different transmit powers; a relation between a signal bandwidth for the pair of links and a SI suppression value; and an amount of frequency separation between each link in the pair of links. In some embodiments of this aspect, the transmitted information about the pair of radio links comprises at least one of a maximum transmit power value, a self-interference, SI, suppression value and a modulation and coding scheme, MCS, associated with the pair of radio links. In some embodiments of this aspect, the at least one communication parameter value is based at least in part on a comparison of the transmitted information pertaining to the MLD's capabilities to information pertaining to the second MLD's capabilities in order to enable the STR on the pair of radio links.

In some embodiments of this aspect, the processing circuitry is further configured to cause the MLD to: receive a request for information about the pair of radio links from the second MLD; and the transmission of the information about the pair of radio links is responsive to the received request. In some embodiments of this aspect, the processing circuitry is further configured to cause the MLD to reclassify the pair of radio links from non-STR to STR based at least in part on the at least one communication parameter value. In some embodiments of this aspect, at least one of: the pair of radio links is a STR constrained pair of links; and the pair of radio links is a pair of non-STR links for a first set of communication parameter values and the pair of radio links is a pair of STR links for a second set of communication parameter values, the first set being different from the second set.

In some embodiments of this aspect, when a first link in the pair of radio links is associated with a first data load and a second link in the pair of radio links is associated with a second data load, the first data load being greater than the second data load: the at least one communication parameter value comprises a first communication parameter value for the first link assuming no data load on the second link.

According to claim 1, a method implemented in a simultaneous transmit and receive, STR, capable multi-link device, MLD, comprising an access point, AP, station, STA, is provided. The method includes selecting at least one communication parameter value for a pair of radio links to enable STR on the pair of radio links between the MLD and a second MLD, the second MLD comprising a non-access point, non-AP, STA, and the selected at least one communication parameter value comprising a value of at least one of: at least one first communication parameter for a first link in the pair and at least one second communication parameter for a second link in the pair.

In some embodiments of this aspect, the method further includes using the selected at least one communication parameter value to perform a multi-link operation, MLO, on the pair of radio links. In some embodiments of this aspect, the at least one communication parameter value comprises a value of at least one of: a transmit power for the first link in the pair of radio links; a transmit power for the second link in the pair of radio links; a modulation and coding scheme, MCS, for the first link; a MCS for the second link; and a signal bandwidth for at least one of the first link and the second link. In some embodiments of this aspect, the selection is based at least in part on at least one of: a data load in each link in the pair of radio links; an amount of self-interference caused by a transmission between the MLD and the second MLD for at least two different transmit powers; a relation between a signal bandwidth for the pair of links and a SI suppression value; and an amount of frequency separation between each link in the pair of links.

In some embodiments of this aspect, the method further includes obtaining information about the pair of radio links, the information pertaining to at least one of the MLD's capabilities and the second MLD's capabilities for the pair of radio links. In some embodiments of this aspect, the obtained information is used to select the at least one communication parameter value to enable the STR on the pair of radio links. In some embodiments of this aspect, the method further includes modifying the at least one communication parameter value based at least in part on the obtained information. In some embodiments of this aspect, the obtained information comprises at least one of a maximum transmit power value, a self-interference, SI, suppression value and a modulation and coding scheme, MCS, associated with the pair of radio links.

In some embodiments of this aspect, selecting comprises selecting the at least one communication parameter value based at least in part on a comparison of the information pertaining to the MLD's capabilities to the information pertaining to the second MLD's capabilities in order to enable the STR on the pair of radio links. In some embodiments of this aspect, the method further includes requesting the information about the pair of radio links from the second MLD. In some embodiments of this aspect, the method further includes reclassifying the pair of radio links from non-STR to STR based at least in part on the selection of the at least one communication parameter value. In some embodiments of this aspect, at least one of: the pair of radio links is a STR constrained pair of links; and the pair of radio links is a pair of non-STR links for a first set of communication parameter values and the pair of radio links is a pair of STR links for a second set of communication parameter values, the first set being different from the second set.

In some embodiments of this aspect, when a first link in the pair of radio links is associated with a first data load and a second link in the pair of radio links is associated with a second data load, the first data load being greater than the second data load: selecting comprises selecting a first communication parameter value for the first link assuming no data load on the second link.

According to independent claim 4, a method implemented in a simultaneous transmit and receive, STR, capable multi-link device, MLD, comprising a non-access point, non-AP, station, STA, is provided. The method includes transmitting information about a pair of radio links to a second MLD; and performing a multi-link operation, MLO, on the pair of radio links between the MLD and the second MLD, the pair of radio links using at least one communication parameter value, the at least one communication parameter value being based at least in part on the transmitted information and the at least one communication parameter value comprising a value of at least one of: at least one first communication parameter for a first link in the pair and at least one second communication parameter for a second link in the pair.

In some embodiments of this aspect, the at least one communication parameter value is based at least in part on the transmitted information to enable STR on the pair of radio links. In some embodiments of this aspect, the method further includes receiving an indication of the at least one communication parameter value to use for the pair of radio links from the second MLD. In some embodiments of this aspect, the at least one communication parameter value comprises a value of at least one of: a transmit power for the first link in the pair of radio links; a transmit power for the second link in the pair of radio links; a modulation and coding scheme, MCS, for the first link; a MCS for the second link; and a signal bandwidth for at least one of the first link and the second link. In some embodiments of this aspect, the at least one communication parameter value is based at least in part on at least one of: a data load in each link in the pair of radio links; an amount of self-interference, SI, caused by a transmission between the MLD and the second MLD for at least two different transmit powers; a relation between a signal bandwidth for the pair of links and a SI suppression value; and an amount of frequency separation between each link in the pair of links.

In some embodiments of this aspect, the transmitted information about the pair of radio links comprises at least one of a maximum transmit power value, a self-interference, SI, suppression value and a modulation and coding scheme, MCS, associated with the pair of radio links. In some embodiments of this aspect, the at least one communication parameter value is based at least in part on a comparison of the transmitted information pertaining to the MLD's capabilities to information pertaining to the second MLD's capabilities in order to enable the STR on the pair of radio links. In some embodiments of this aspect, the method further includes receiving a request for information about the pair of radio links from the second MLD, the transmission of the information about the pair of radio links being responsive to the received request.

In some embodiments of this aspect, the method further includes reclassifying the pair of radio links from non-STR to STR based at least in part on the at least one communication parameter value. In some embodiments of this aspect, at least one of: the pair of radio links is a STR constrained pair of links; and the pair of radio links is a pair of non-STR links for a first set of communication parameter values and the pair of radio links is a pair of STR links for a second set of communication parameter values, the first set being different from the second set. In some embodiments of this aspect, when a first link in the pair of radio links is associated with a first data load and a second link in the pair of radio links is associated with a second data load, the first data load being greater than the second data load: the at least one communication parameter value comprises a first communication parameter value for the first link assuming no data load on the second link.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 illustrates another example system architecture according to some embodiments of the present disclosure;
FIG. 2 illustrates yet another example system architecture and example hardware arrangements for devices in the system, according to some embodiments of the present disclosure;
FIG. 3 is a flowchart of an example process in an access point (AP) MLD according to some embodiments of the present disclosure;
FIG. 4 is a flowchart of an example process in a non-AP according to some embodiments of the present disclosure; and
FIG. 5 is a flow diagram illustrating an example process according to some embodiments of the present disclosure.

### DETAILED DESCRIPTION

As discussed above, existing solutions for STR MLO propose to classify a pair of supported links in a MLD as either STR (meaning that they can be used to perform STR MLO) or non-STR (meaning that they cannot be used to perform STR MLO).

However, STR capability for a particular pair of links may actually be dependent on values of multiple communication parameters such as, for example, TX power, RX power, modulation and coding scheme (MCS), signal bandwidth (BW), channel separation (e.g., channel edge separation, channel center frequency separation, etc.) and so on. A pair of supported links in an MLD may be classified as STR for some combinations of values of such parameters and classified as non-STR for some other combinations, which may be referred to as "STR constrained" or more particularly, a "STR constrained" pair of links. Therefore, there is a strong likelihood that such a STR constrained pair of links may be simply classified as non-STR and not used for STR MLO (even if there are some combinations of parameter values that would allow the STR constrained pair of links to be classified as STR). If such a straightforward rigid classification approach is employed, it may be inefficient and wasteful to declare a pair of links as non-STR if they cannot be used for STR MLO for only a subset of combinations of values of the related communication parameters. Therefore, the problem of STR capable MLDs not performing STR MLO using available channels because of underlying STR constraints or simply because of their inefficient classification as non-STR is tackled in this disclosure.

Some embodiments of the present disclosure provide arrangements to allow a flexible setup and/or execution of STR MLO in devices, such as Wi-Fi devices adhering to the EHT standard and beyond. Some embodiments of this disclosure provide for a set of steps and/or processes that may be performed by a STR capable MLD to setup and/or execute a STR MLO using STR constrained set (set may mean a pair or more than two) of links. An underlying concept of some embodiments is to allow flexibility in determining which communication parameter values to select for a STR constrained pair of links so that an MLD can perform STR MLO.

Some embodiments of the present disclosure propose that the corresponding choice/selection/determination of values of one or more communication parameters, such as, for example, TX powers and MCSs, may be determined by the STR capable AP MLD. In some embodiments, the choice/selection/determination of values of one or more communication parameters may be subject to a dynamic signaling evaluation and/or negotiation based approach between, for example, the STR capable AP MLD and the non-AP STAs, e.g., depending on the scenario. Specifically, it is noted that in some embodiments, an MLD with two non-AP STAs may or may not be STR capable depending on how these STAs are configured (e.g., which values of communication parameters, e.g., TX power and MCS, these STAs are configured with). In some embodiments, rather by the classification of the operating channels of non-AP STAs itself as STR or non-STR, it is proposed that one or more of the values of communication parameters of the non-AP STAs may be provided to an AP MLD such that the AP MLD may, for example, make adjustments such that the non-AP STAs are enabled to perform STR over those channels.

Some embodiments of the present disclosure provide arrangements for a flexible set of steps for a STR capable MLD having STR constraints on a supported set of channels/links to perform STR MLO using these channels. Some embodiments of this disclosure may thus help to prevent cases where available links are not used for STR MLO because those links having been declared as non-STR due to underlying STR constraints. Some embodiments of the proposed solution may advantageously provide more efficient spectrum utilization as compared to existing arrangements, while also achieving lower latency communication, as compared to existing arrangements.

Before describing in detail exemplary embodiments, it is noted that the embodiments reside primarily in combinations of apparatus components and processing steps related to STR MLO. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

In some embodiments, the non-limiting term "device" is used to describe a wireless device (WD) and/or user equipment (UE) that may be used to implement some embodiments of the present disclosure. The device may be a simultaneous transmit and receive (STR) capable multi-link device (MLD). In some embodiments, the STR capable MLD may be and/or comprise an access point (AP) station (STA), in which the STR capable MLD may be called an STR capable AP MLD. In some embodiments, the STR capable MLD may be and/or comprise a non-access point (AP) station (STA), in which the STR capable MLD may be called an STR capable non-AP MLD. In some embodiments, the device may be a single-link device, such as a single-link non-AP STA. In some embodiments, the device may be any type of wireless device capable of communicating with a network node, such as an AP, over radio signals. The device may be any radio communication device, target device, a portable device, device-to-device (D2D) device, machine type device or device capable of machine to machine communication (M2M), low-cost and/or low-complexity device, a sensor equipped with a device, a computer, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device, etc.

In some embodiments, the term "access point" or "AP" is used interchangeably and may comprise, or be a network node. The AP may include any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, integrated access and backhaul (IAB), donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The AP may also comprise test equipment. The AP may comprise a radio router, a radio transceiver, a network controller, etc.

A device may be considered a node and may include physical components, such as processors, allocated processing elements, or other computing hardware, computer memory, communication interfaces, and other supporting computing hardware. The node may use dedicated physical components, or the node may be allocated use of the physical components of another device, such as a computing device or resources of a datacenter, in which case the node is said to be virtualized. A node may be associated with multiple physical components that may be located either in one location, or may be distributed across multiple locations.

Even though the descriptions herein may be explained in the context of one of a Downlink (DL) and an Uplink (UL) communication, it should be understood that the basic principles disclosed may also be applicable to the other of the one of the DL and the UL communication. In some embodiments in this disclosure, the principles may be considered applicable to a transmitter and a receiver. For DL communication, the AP station is the transmitter and the receiver is the non-AP station. For the UL communication, the transmitter is the non-AP station and the receiver is the AP station.

Signaling may generally comprise one or more symbols and/or signals and/or messages. A signal may comprise or represent one or more bits. An indication may represent signaling, and/or be implemented as a signal, or as a plurality of signals. One or more signals may be included in and/or represented by a message. Signaling, in particular control signaling, may comprise a plurality of signals and/or messages, which may be transmitted on different carriers and/or be associated to different signaling processes, e.g. representing and/or pertaining to one or more such processes and/or corresponding information. An indication may comprise signaling, and/or a plurality of signals and/or messages and/or may be comprised therein, which may be transmitted on different carriers and/or be associated to different acknowledgement signaling processes, e.g. representing and/or pertaining to one or more such processes. Signaling associated to a channel may be transmitted such that represents signaling and/or information for that channel, and/or that the signaling is interpreted by the transmitter and/or receiver to belong to that channel. Such signaling may generally comply with transmission parameters and/or format/s for the channel.

An indication generally may explicitly and/or implicitly indicate the information it represents and/or indicates. Implicit indication may for example be based on position and/or resource used for transmission. Explicit indication may for example be based on a parametrization with one or more parameters, and/or one or more index or indices corresponding to a table, and/or one or more bit patterns representing the information.

In some embodiments, the term "obtain" or "obtaining" is used herein and may indicate obtaining in e.g., memory such as in the case where the information is predefined or otherwise predetermined. The term "obtain" or "obtaining" as used herein may also indicate obtaining by receiving signaling indicating the information obtained.

In some embodiments, a "set" as used herein may be a set of 1 or more elements in the set.

Note also that some embodiments of the present disclosure may be supported by an Institute of Electrical Engineers (IEEE) 802.11 standard. IEEE 802.11 denotes a set of Wireless Local Area Network (WLAN) air interface standards developed by the IEEE 802.11 committee for short-range communications (e.g., tens of meters to a few hundred meters). Some embodiments may also be supported by a standard documents disclosed in Third Generation Partnership Project (3GPP) technical specifications. That is, some embodiments of the description can be supported by the above documents. In addition, all the terms disclosed in the present document may be described by the above standard documents.

Note that although terminology from one particular wireless system, such as, for example, IEEE 802.11be, 3rd Generation Partnership Project (3GPP), Long Term Evolution (LTE), 5th Generation (5G) and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a device (e.g., MLD) described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

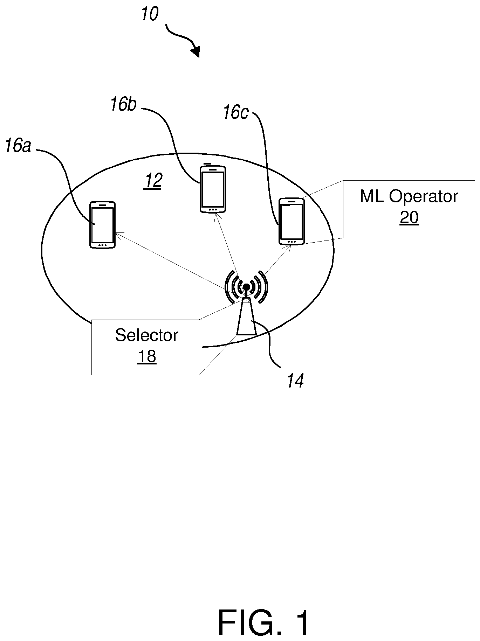

Referring again to the drawing figures, in which like elements are referred to by like reference numerals, there is shown in FIG. 1 a schematic diagram of the communication system 10, according to one embodiment, constructed in accordance with the principles of the present disclosure. The communication system 10 in FIG. 1 is a non-limiting example and other embodiments of the present disclosure may be implemented by one or more other systems and/or networks. Referring to FIG. 1, system 10 may comprise a WLAN. The devices in the system 10 may communicate over one or more spectrums, such as, for example, an unlicensed spectrum, which may include frequency bands traditionally used by Wi-Fi technology. One or more of the devices may be further configured to communicate over other frequency bands, such as shared licensed frequency bands, etc. The system 10 may include a coverage area 12, which may be defined by the access point (AP) 14. The AP 14 may or may not be connectable to another network, such as a core network over a wired or wireless connection. The AP 14 may be a simultaneous transmit and receive (STR) capable AP station (STA) multi-link device (MLD) (also referred to herein as AP MLD 14). The system 10 includes a plurality of non-AP devices, such as, for example, STR capable non-AP MLDs 16a, 16b, 16c (collectively referred to as STR capable non-AP MLDs 16 or more concisely non-AP MLDs 16). Each of the non-AP MLDs 16 may be located in the coverage area 12 and may be configured to wirelessly connect to the AP MLD 14. Note that although one AP MLD 14 and three non-AP MLDs 16 are shown for convenience, the communication system may include many more non-AP STAs and APs.

It should be understood that the system 10 may include additional nodes/devices not shown in FIG. 1. In addition, the system 10 may include many more connections/interfaces than those shown in FIG. 1.

Also, it is contemplated that a non-AP MLD 16 can be in simultaneous communication and/or configured to separately communicate with more than one AP 14 and more than one type of AP 14.

An AP MLD 14 is configured to include a selector 18 which is configured to select at least one communication parameter value for a pair of radio links to enable STR on the pair of radio links between the MLD and a second MLD, the second MLD comprising a non-access point, non-AP, STA, and the selected at least one communication parameter value comprising value of at least one of: at least one first communication parameter for a first link in the pair and at least one second communication parameter for a second link in the pair.

A non-AP MLD 16 is configured to include a multi-link (ML) operator 20 which is configured to cause the MLD 16 to transmit information about a pair of radio links to a second MLD; and perform a multi-link operation, MLO, on the pair of radio links between the MLD and the second MLD, the pair of radio links using at least one communication parameter value, the at least one communication parameter value being based at least in part on the transmitted information and the at least one communication parameter value comprising a value of at least one of: at least one first communication parameter for a first link in the pair and at least one second communication parameter for a second link in the pair.

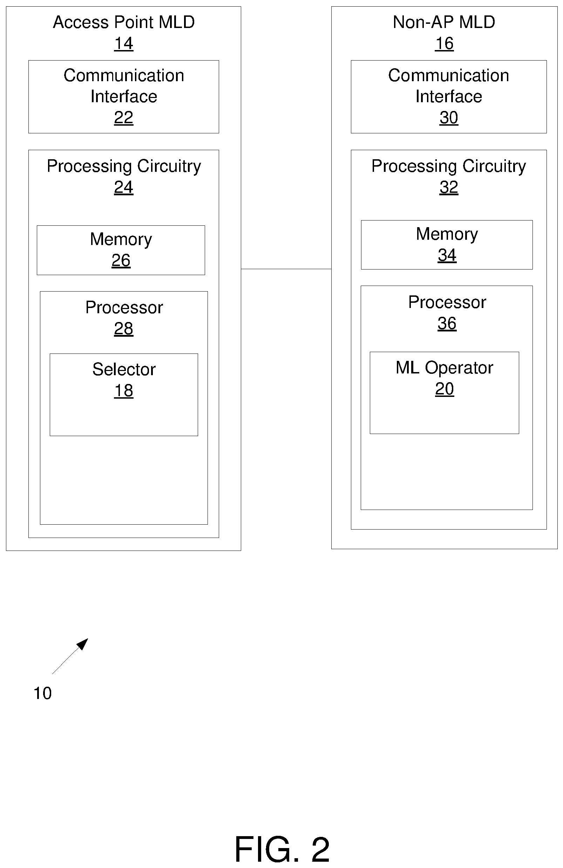

Example implementations, in accordance with some embodiments, of an AP MLD 14 and a non-AP MLD 16, will now be described with reference to FIG. 2.

The AP MLD 14 includes a communication interface 22, processing circuitry 24, and memory 26. The communication interface 22 may be configured to communicate with any of the nodes/devices in the system 10 according to some embodiments of the present disclosure. In some embodiments, the communication interface 22 may be formed as or may include, for example, one or more radio frequency (RF) transmitters, one or more RF receivers, and/or one or more RF transceivers, and/or may be considered a radio interface. In some embodiments, the communication interface 22 may also include a wired interface.

The processing circuitry 24 may include one or more processors 28 and memory, such as, the memory 26. In particular, in addition to a traditional processor and memory, the processing circuitry 24 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 28 may be configured to access (e.g., write to and/or read from) the memory 26, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

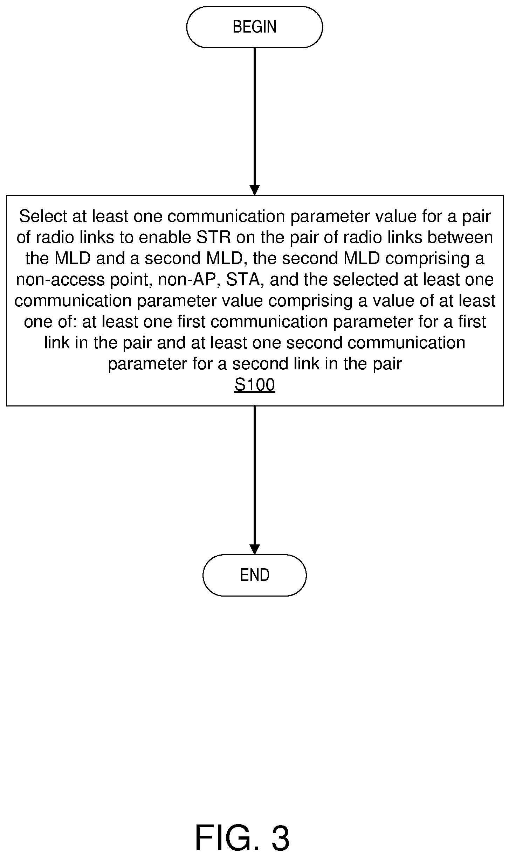

Thus, the AP MLD 14 may further include software stored internally in, for example, memory 26, or stored in external memory (e.g., database) accessible by the AP MLD 14 via an external connection. The software may be executable by the processing circuitry 24. The processing circuitry 24 may be configured to control any of the methods and/or processes described herein and/or to cause such methods, and/or processes to be performed, e.g., AP MLD 14. The memory 26 is configured to store data, programmatic software code and/or other information described herein. In some embodiments, the software may include instructions stored in memory 26 that, when executed by the processor 28 and/or selector 18 causes the processing circuitry 24 and/or configures the AP MLD 14 to perform the processes described herein with respect to the AP MLD 14 (e.g., processes described with reference to FIG. 3 and/or any of the other figures).

The non-AP MLD 16 includes a communication interface 30, processing circuitry 32, and memory 34. The communication interface 30 may be configured to communicate with the AP MLD 14 and/or other elements in the system 10 according to some embodiments of the present disclosure. In some embodiments, the communication interface 30 may be formed as or may include, for example, one or more radio frequency (RF) transmitters, one or more RF receivers, and/or one or more RF transceivers, and/or may be considered a radio interface. In some embodiments, the communication interface 30 may also include a wired interface.

The processing circuitry 32 may include one or more processors 36 and memory, such as, the memory 34. In particular, in addition to a traditional processor and memory, the processing circuitry 32 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 36 may be configured to access (e.g., write to and/or read from) the memory 34, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

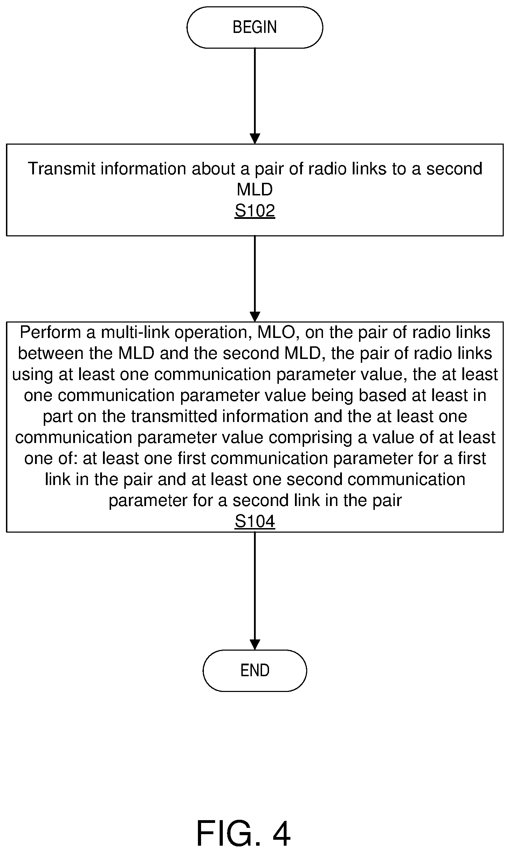

Thus, the non-AP MLD 16 may further include software stored internally in, for example, memory 34, or stored in external memory (e.g., database) accessible by the non-AP MLD 16 via an external connection. The software may be executable by the processing circuitry 32. The processing circuitry 32 may be configured to control any of the methods and/or processes described herein and/or to cause such methods, and/or processes to be performed, e.g., by the non-AP MLD 16. The memory 34 is configured to store data, programmatic software code and/or other information described herein. In some embodiments, the software may include instructions stored in memory 34 that, when executed by the processor 36 and/or ML operator 20, causes the processing circuitry 32 and/or configures the non-AP MLD 16 to perform the processes described herein with respect to the non-AP MLD 16 (e.g., processes described with reference to FIG. 4 and/or any of the other figures).

In FIG. 2, the connection between the devices AP MLD 14 and the non-AP MLDs 16 is shown without explicit reference to any intermediary devices or connections. However, it should be understood that intermediary devices and/or connections may exist between these devices, although not explicitly shown.

Although FIG. 2 shows selector 18 and ML operator 20, as being within a respective processor, it is contemplated that these elements may be implemented such that a portion of the elements is stored in a corresponding memory within the processing circuitry. In other words, the elements may be implemented in hardware or in a combination of hardware and software within the processing circuitry.

FIG. 3 is a flowchart of an example process in an AP for e.g., AP MLD 14 according to some embodiments of the present disclosure. One or more Blocks and/or functions and/or methods performed by the AP MLD 14 may be performed by one or more elements of AP MLD 14 such as by selector 18 in processing circuitry 24, memory 26, processor 28, communication interface 22, etc. according to the example process/method. The AP MLD 14 is a simultaneous transmit and receive, STR, capable multi-link device, MLD, comprising at least one access point, AP, station, STA. The example process includes selecting (Block S 100), such as via selector 18, processing circuitry 24, memory 26, processor 28 and/or communication interface 22, at least one communication parameter value for a pair of radio links to enable STR on the pair of radio links between the MLD and a second MLD, the second MLD comprising a non-access point, non-AP, STA, and the selected at least one communication parameter value comprising a value of at least one of: at least one first communication parameter for a first link in the pair and at least one second communication parameter for a second link in the pair.

In some embodiments, the method further includes using, such as via selector 18, processing circuitry 24, memory 26, processor 28 and/or communication interface 22, the selected at least one communication parameter value to perform a multi-link operation, MLO, on the pair of radio links. In some embodiments, the at least one communication parameter value comprises a value of at least one of: a transmit power for the first link in the pair of radio links; a transmit power for the second link in the pair of radio links; a modulation and coding scheme, MCS, for the first link; a MCS for the second link; and a signal bandwidth for at least one of the first link and the second link. In some embodiments, the selection is based at least in part on at least one of: a data load in each link in the pair of radio links; an amount of self-interference caused by a transmission between the MLD and the second MLD for at least two different transmit powers; a relation between a signal bandwidth for the pair of links and a SI suppression value; and an amount of frequency separation between each link in the pair of links.

In some embodiments, the method further includes obtaining, such as via selector 18, processing circuitry 24, memory 26, processor 28 and/or communication interface 22, information about the pair of radio links, the information pertaining to at least one of the MLD's capabilities and the second MLD's capabilities for the pair of radio links. In some embodiments, the obtained information is used to select the at least one communication parameter value to enable the STR on the pair of radio links. In some embodiments, the method further includes modifying, such as via selector 18, processing circuitry 24, memory 26, processor 28 and/or communication interface 22, the at least one communication parameter value based at least in part on the obtained information. In some embodiments, the obtained information comprises at least one of a maximum transmit power value, a self-interference, SI, suppression value and a modulation and coding scheme, MCS, associated with the pair of radio links.

In some embodiments, selecting comprises selecting, such as via selector 18, processing circuitry 24, memory 26, processor 28 and/or communication interface 22, the at least one communication parameter value based at least in part on a comparison of the information pertaining to the MLD's capabilities to the information pertaining to the second MLD's capabilities in order to enable the STR on the pair of radio links. In some embodiments, the method further includes requesting, such as via selector 18, processing circuitry 24, memory 26, processor 28 and/or communication interface 22, the information about the pair of radio links from the second MLD. In some embodiments, the method further includes reclassifying, such as via selector 18, processing circuitry 24, memory 26, processor 28 and/or communication interface 22, the pair of radio links from non-STR to STR based at least in part on the selection of the at least one communication parameter value.

In some embodiments, at least one of: the pair of radio links is a STR constrained pair of links; and the pair of radio links is a pair of non-STR links for a first set of communication parameter values and the pair of radio links is a pair of STR links for a second set of communication parameter values, the first set being different from the second set. In some embodiments, when a first link in the pair of radio links is associated with a first data load and a second link in the pair of radio links is associated with a second data load, the first data load being greater than the second data load: selecting comprises selecting, such as via selector 18, processing circuitry 24, memory 26, processor 28 and/or communication interface 22, a first communication parameter value for the first link assuming no data load on the second link.

FIG. 4 is a flowchart of an example process in a non-AP STA for e.g., non-AP MLD 16 according to some embodiments of the present disclosure. One or more Blocks and/or functions and/or methods performed by the non-AP MLD 16 may be performed by one or more elements of non-AP MLD 16 such as ML operator 20 in processing circuitry 32, memory 34, processor 36, communication interface 30, etc. according to the example process/method. The non-AP MLD 16 is a simultaneous transmit and receive, STR, capable multi-link device, MLD, comprising a non-access point, non-AP, station, STA. The example process includes transmitting (Block S102), such as via ML operator 20, processing circuitry 32, memory 34, processor 36 and/or communication interface 30, information about a pair of radio links to a second MLD. The process includes performing (Block S104), such as via ML operator 20, processing circuitry 32, memory 34, processor 36 and/or communication interface 30, a multi-link operation, MLO, on the pair of radio links between the MLD and the second MLD, the pair of radio links using at least one communication parameter value, the at least one communication parameter value being based at least in part on the transmitted information and the at least one communication parameter value comprising a value of at least one of: at least one first communication parameter for a first link in the pair and at least one second communication parameter for a second link in the pair.

In some embodiments, the at least one communication parameter value is based at least in part on the transmitted information to enable STR on the pair of radio links. In some embodiments, the method further includes receiving, such as via ML operator 20, processing circuitry 32, memory 34, processor 36 and/or communication interface 30, an indication of the at least one communication parameter value to use for the pair of radio links from the second MLD. In some embodiments, the at least one communication parameter value comprises a value of at least one of: a transmit power for the first link in the pair of radio links; a transmit power for the second link in the pair of radio links; a modulation and coding scheme, MCS, for the first link; a MCS for the second link; and a signal bandwidth for at least one of the first link and the second link.

In some embodiments, the at least one communication parameter value is based at least in part on at least one of: a data load in each link in the pair of radio links; an amount of self-interference, SI, caused by a transmission between the MLD and the second MLD for at least two different transmit powers; a relation between a signal bandwidth for the pair of links and a SI suppression value; and an amount of frequency separation between each link in the pair of links. In some embodiments, the transmitted information about the pair of radio links comprises at least one of a maximum transmit power value, a self-interference, SI, suppression value and a modulation and coding scheme, MCS, associated with the pair of radio links.

In some embodiments, the at least one communication parameter value is based at least in part on a comparison of the transmitted information pertaining to the MLD's capabilities to information pertaining to the second MLD's capabilities in order to enable the STR on the pair of radio links. In some embodiments, the method further includes receiving, such as via ML operator 20, processing circuitry 32, memory 34, processor 36 and/or communication interface 30, a request for information about the pair of radio links from the second MLD, the transmission of the information about the pair of radio links being responsive to the received request. In some embodiments, the method further includes reclassifying, such as via ML operator 20, processing circuitry 32, memory 34, processor 36 and/or communication interface 30, the pair of radio links from non-STR to STR based at least in part on the at least one communication parameter value.

In some embodiments, at least one of: the pair of radio links is a STR constrained pair of links; and the pair of radio links is a pair of non-STR links for a first set of communication parameter values and the pair of radio links is a pair of STR links for a second set of communication parameter values, the first set being different from the second set. In some embodiments, when a first link in the pair of radio links is associated with a first data load and a second link in the pair of radio links is associated with a second data load, the first data load being greater than the second data load: the at least one communication parameter value comprises a first communication parameter value for the first link assuming no data load on the second link.

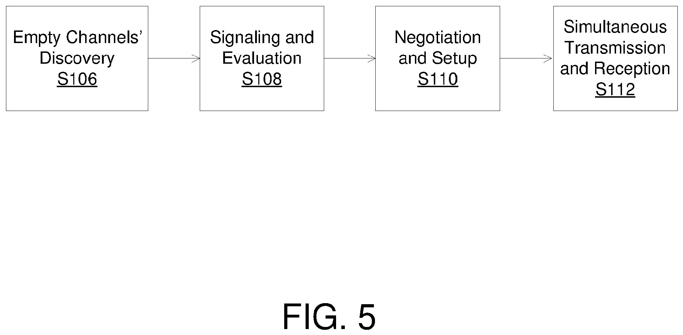

Having generally described arrangements for STR multi-link operation in e.g., EHT, a more detailed description of some of the embodiments are provided as follows with reference to FIG. 5, and which may be implemented by AP MLD 14 and/or may be implemented by non-AP MLD 16.

The MLO is a differentiating feature in EHT compared to earlier standards. Supporting STR MLO may provide multiple benefits such as having simultaneous downlink (DL) and uplink (UL) transmissions, latency reduction, overall improved spectrum usage among others.

A STR capable MLD, such as a non-AP MLD 16 may classify and announce pairs of supported links as STR or non-STR. While such a binary classification approach may simplify making decisions to set up and perform STR MLO, it has also been noted that there is a possibility of losing out on opportunities to perform STR MLO by rigidly classifying a constrained pair of links as non-STR.

Some embodiments of the present disclosure may minimize the probability that two available channels/links cannot be used for STR. To help solve this challenge, some embodiments of this disclosure propose a sequence of steps and/or a process that may be adapted and performed by AP MLD 14 and/or non-AP MLD 16 during the setup and/or execution of a STR MLO.

FIG. 5 illustrates one example of a sequence of steps for setup and execution of STR MLO according to one embodiment of the present disclosure. It should be understood that the present disclosure is not limited to all these steps in FIG. 5 being executed. In other words, the advantages of the present disclosure will be appreciated also if potentially one or more steps are not performed or if the steps are performed in another order. In addition, the exact method for how the different steps are performed may also be modified in other embodiments.

### Step S106: Empty Channels' Discovery

In step S106, a STR capable MLD (e.g., AP MLD 14 and/or non-AP MLD 16) scans the medium and identifies a set of channels to be unoccupied and available for communication. Step S106 may be skipped in certain situations, e.g. when an AP MLD 14 already has a number of non-AP MLDs 16 associated with it, and the task is to determine if a new non-AP MLD 16 that associates to the AP MLD 14 will be able to use STR.

### Step S108: Signaling and Evaluation

Based on the prior information about other devices, the STR capable MLD (e.g., AP MLD 14 and/or non-AP MLD 16) initiates a signaling protocol (for e.g., probe signal and responses) to evaluate the STR capability for all STR capable MLDs that it intends to communicate with, corresponding to the channels that have been identified as available in Step S106. Step S108 may also be performed before Step S106 in some embodiments, such as, for example, when an AP MLD 14 may first determine the properties of non-AP STAs before scanning for empty channels.

In some embodiments, the signaling may involve that the MLD containing the APs (e.g., AP MLD 14) collecting information regarding the abilities/capabilities for the non-AP STAs (e.g., comprised in the non-AP MLDs 16) to operate in STR mode. Such abilities may, for example, include how much self-interference (SI) may be suppressed for various TX power values and frequency separations. Such information may then be used when searching for empty channels (in case Step S106 and Step S108 are swapped), and/or such information may also be used to schedule the non-AP STAs using suitable TX power value(s) and MCS(s).

### Step S110: Negotiation and Setup

Based on the signaling and evaluation in Step S108, the STR capable MLD (e.g., AP MLD 14) may negotiate with the devices (e.g., non-AP MLDs 16) involved. In some embodiments, one or more of the values of different communication parameters such as TX power, MCS, etc. may be determined/selected for all the devices (e.g., AP MLD 14 and/or non-AP MLD 16). In some embodiments, step S108 may to some extent be omitted in, for example, a situation where the AP MLDs 14 schedule the non-AP STAs (e.g., comprised in the non-AP MLDs 16), including both determining TX power and MCS for an uplink (UL) transmission (i.e., transmission from a non-AP MLD 16 to an AP MLD 14).

### Step S112: Simultaneous Transmission and Reception

In Step S112, e.g., after value(s) for the one or more communication parameters have been determined/selected for a supported pair of links to enable STR on the pair of links, the STR MLO may be executed (e.g., by AP MLD 14 and/or non-AP MLD 16) on the pair of links.

The adaptation of the above steps (mainly steps S108 and S110) for different STR MLO scenarios is discussed below.

In some embodiments, the capability of a MLD (e.g., AP MLD 14 and/or non-AP MLD 16) to perform STR using available links/channels may depend on one or multiple factors, such as values of communication parameters e.g., TX power, MCS, signal bandwidth (BW), etc. as well as implementation specific parameters such as TX to RX radio frequency isolation, TX filtering, RX filtering, SI suppression (amount of cancellation of the TX signal with respect to the RX channel), etc. The implementation specific parameters may be fixed and generally cannot be modified during each instance of communication. Being aware about the impact of such implementation specific parameters on the STR capability may be useful for a STR capable MLD while deciding the values of the variable communication parameters during the setup phase of a STR MLO. This disclosure provides following guidelines for a STR capable MLD (e.g., AP MLD 14 and/or non-AP MLD 16) to appropriately select/determine communication parameter values during e.g., the STR MLO setup phase when links/channels that may involve STR constraints are to be used.

### 1. Choice of MCS:

In a STR MLO, how much SI can be handled may to a large extent depend on what MCS is used for the received signal. A MCS with a higher order modulation and higher code rate (termed as high MCS in the context of this disclosure) may put a much harder requirement on SI suppression than if a lower MCS was to be used for the signal. Typically, as high MCS as possible is selected for a link/channel based on the received signal power. However, in some embodiments, in case of STR MLO, MCS may be selected for one or more links in the pair of links based on the interference level, e.g., rather than on the power of the desired signal. Therefore, in some embodiments, appropriate values of MCS may be selected/determined based on e.g., an estimated signal-to-interference ratio (SIR) or estimated signal-to-interference-plus-noise ratio (SINR) such that successful reception of a desired signal at the STR capable MLD (e.g., AP MLD 14 and/or non-AP MLD 16) is possible even in the presence of an SI signal (e.g., caused by leakage of a simultaneous transmission by the STR capable MLD).

### 2. Choice of TX power/PA Backoff:

While determining/selecting TX powers for a STR MLO, a STR capable MLD (e.g., AP MLD 14 and/or non-AP MLD 16) may determine/select a lower TX power for its transmission to reduce the resultant level of the SI signal. Lower TX power may be obtained by the STR capable MLD by backing off the power amplifier (PA), which may help to reduce the amount of distortion in the TX signal. Having lesser PA distortion components in the TX leakage may be beneficial from the desired RX signal's reception point of view as the TX leakage causes lesser interference to the RX signal. Lesser PA distortion in the TX leakage also may lead to improved SI suppression if any SI cancellation algorithms are used by the STR capable MLD, thereby further enhancing its reception capability. While a lower TX power may be beneficial for a STR capable MLD (e.g., AP MLD 14 and/or non-AP MLD 16) from its own desired signal's reception point of view, it would also reduce the desired signal power at the intended receiver (e.g., another STR capable MLD). Thus, a tradeoff may exist, and it may be tackled by implementing appropriate decision-making (e.g., communication parameter value selection) algorithms to ensure sufficient desired signal power for successful reception. It is worth emphasizing here that the impact of PA backoff may be highly non-linear. For example, backing off the PA by only, say, 3 dB, may reduce the SI by 10-20 dB. Thus, in some embodiments, it may not be sufficient to just signal how much the SI can be suppressed (at a specific TX power), but also an amount of SI suppression may be signaled for different TX powers that are relevant.

### 3. Choice of Channels:

Among the available links/channels, a STR capable MLD (e.g., AP MLD 14 and/or non-AP MLD 16) may select a TX link/channel such that the channel separation between the TX link and RX link in the pair of links is maximized. This may help to lower the TX leakage from the RX link's point of view.

### 4. Choice of BW:

Some embodiments may consider a BW selection. For selecting a signal BW, a STR capable MLD (e.g., AP MLD 14 and/or non-AP MLD 16) may select its TX link/channel BW depending on e.g., the knowledge of its corresponding TX spectral mask. It may be noted that a resultant TX spectral mask may not only depend on values of communication parameters such as TX power and MCS, but also on implementation specific aspects such as magnitude responses of the TX filters. Among the available options, it may be better to choose a BW exhibiting a more stringent TX spectral mask with respect to the RX channel under consideration. This may help to reduce the resultant SI. Also, the selection of the BW for one or more link in a pair of links may be based on whether or how well it maximizes the link/channel separation between the TX and RX links/channels in the pair of links, as compared to other potential BWs choices.

A higher MCS is generally used with a greater PA backoff since a higher MCS requires that the signal is sent with less distortion. The STR capability of a STR capable MLD (e.g., AP MLD 14 and/or non-AP MLD 16) using STR constrained set (set may mean a pair or more than two) of links may be dependent on the choice of MCS and TX powers for its TX as well as RX links/signals. It may therefore be useful to select them appropriately, especially with the knowledge of SI suppression at the STR capable MLD. Some embodiments of the present disclosure therefore propose that during, for example, a setup phase of a STR MLO, there may be a signaling step which involves sharing of appropriate information to evaluate the STR capabilities of one or both sides of the communication and make a determination/selection of values of one or more communication parameters, such as the MCS and TX power of the TX and RX links/signals. A goal for such determination/selection may include maximizing throughput in the high load link under the constraint of minimum delay in the low throughput link.

This disclosure provides examples for how a STR capable MLD (e.g., AP MLD 14 and/or non-AP MLD 16) may appropriately select/determine values of communication parameters during e.g., the STR MLO setup phase when links/channels that may involve STR constraints are to be used as well as after an initial setup phase. The selection/determination of communication parameters (e.g., parameters and parameter values) may be flexible. For example, values of either the same communication parameter (e.g., transmit power) may be selected for both links in the STR constrained pair; or a value of one communication parameter (e.g., transmit power) may be selected for a link while a value of another communication parameter (e.g., MCS) may be selected for the other link in the STR constrained pair. Some embodiments may provide for values of one or more communication parameters being adjusted for one link, as well as values of one or more communication parameters being adjusted for both links.

Thus, a feature of some embodiments of this disclosure is to provide a flexible method to help evaluate STR capabilities and set up communication parameter values for executing and enabling STR MLO. Following are three examples that may be performed by AP MLD 14 and/or non-AP MLD 16 for setting up the communication parameter values to execute and enable/permit a STR MLO e.g., on a STR constrained pair of links.

It is noted that the examples described below may primarily relate to Steps S108 and S110 shown in FIG. 5.

### Example 1: STR capable AP MLD communicating with a STR capable non-AP MLD

A STR capable AP MLD (e.g., AP MLD 14) requests the STR capable non-AP MLD (e.g., non-AP MLD 16) to signal parameters that are relevant for determining whether STR can be used. Non-limiting example of such parameters are maximum TX power, and SI suppressions corresponding to its different TX powers for different frequency separations, etc. The impact of the signal bandwidth for SI suppression may also be reported.

In some embodiments, the request described above can be made at any time, and may then be used (e.g., by AP MLD 14 and/or non-AP MLD 16) for determining whether two link/channels separated at a specific distance constitute a feasible pair of links/channels to be used for STR MLO. Referring to FIG. 5, this may correspond to for example Step S106 that may be skipped by the AP MLD 14, or may be performed at any of the other steps.

Alternatively, or additionally, in some embodiments, if Step S106 is performed so that the AP MLD 14 already has an idea of what links/channels to use for MLO, the AP MLD 14 may request the non-AP MLD 16 to report the relevant parameters for STR operation using these specific channels, rather than having to report for all possible link/channel pair combinations.

In some embodiments, since the STR capable AP MLD 14 knows its own capabilities when it comes to SI suppression, TX power, etc., the AP MLD 14 may after having received the corresponding information from the STR capable non-AP MLD 16 use such information to select TX powers for the links as well as the corresponding MCSs in a way that allows for/enables STR. A numerical example of this is provided below.

It is noted that the STR capable AP MLD 14 may employ any suitable algorithm to choose which link/channel/s to use for TX and which link/channel/s to use for RX among the channels identified to be available. For example, the TX and RX links/channels may be selected (e.g., by AP MLD 14) depending upon, for example, the uplink/downlink (UL/DL) traffic load (estimated). There are many different ways to signal the information described herein; some options are provided below as examples:
a. Instead of asking for maximum TX powers and SI suppressions for all MCSs, the STR capable AP MLD 14 may just request the STR capable non-AP MLD 16 to signal its maximum TX power and corresponding SI suppression for the available TX and RX links/channels. These values would correspond to the lowest MCS and the STR capable AP MLD 14 can then compute and estimate the rest on its own.
b. Instead of asking for SI suppression values, the STR capable AP MLD 14 may request the STR capable non-AP MLD 16 to signal the residual SI signal power values corresponding to maximum TX powers for the supported MCSs in the available TX and RX links/channels.
c. The STR capable AP MLD 14 may request the STR capable non-AP MLD 16 to provide information for a specific signal BW combination or some possible BW combinations or all possible BW combinations corresponding to the available TX and RX links/channels. This may help the STR capable AP MLD 14 to choose the appropriate signal BWs.
d. As an alternative to requesting information dynamically depending upon a specific combination of available TX and RX links/channels for every frame exchange, the STR capable AP MLD 14 may perform the above signaling only once during the initial ML association of a STR capable non-AP MLD 16. The corresponding one-shot signaling may then involve requesting of the above information from the STR capable non-AP MLD 16 for some or all possible combinations of TX and RX links/channels that it supports.

It is noted that the above signaling may be appropriately adapted when a STR capable AP MLD 14 determines to perform STR MLO while simultaneously communicating with multiple STR capable non-AP MLDs 16.

### Example 2: STR capable AP MLD communicating with two non-AP STAs affiliated with different devices that may or may not be MLDs.

In some embodiments, when a STR capable AP MLD 14 identifies available links/channels for potential STR MLO, and the non-AP STAs are within different devices, it may be assumed that the interference between the two non-AP STA is not an issue (e.g., since the non-AP STAs are in different physical devices, there is no SI at the non-AP STAs' side, as with Example 1 above) and the STR capable AP MLD 14 therefore may just be aware of its own maximum TX powers and SI suppressions corresponding to its supported MCSs in those available links/channels.

Specifically, in some embodiments, it may be so that the STR capable AP MLD 14 cannot transmit at its highest TX power at the same time while it receives a very weak desired signal. The AP MLD 14 may then select to transmit using a reduced TX power when it is receiving a weak desired signal on the other link, and conversely the AP MLD 14 may only transmit at its highest TX power when the AP MLD 14 determines that the received desired signal strength is high. It can here be noted that the AP MLD 14 may request the non-AP STA to use a low MCS (robust modulation and coding) even when the received desired signal power is high to be able to withstand higher SI.

In some embodiments, assuming that there are limitations in the STR capable AP MLD 14, it may determine to reduce the MCS used in at least one of the links and potentially in both links in the pair of links. Depending on the UL/ DL traffic load and knowledge of its capabilities, the STR capable AP MLD 14 may select the TX power and MCS for itself and may signal/indicate to the transmitting non-AP STA about what MCS and minimum TX power the non-AP STA should use. The parameter settings may be selected by the STR capable AP MLD 14 to enable STR MLO, e.g., such that there is successful desired signal reception at the receiving non-AP STA as well as itself. Following is an example of how this can be performed:
i. DL > UL: The STR capable AP MLD 14 selects a high MCS with appropriate TX power based on path loss (PL) estimate. It estimates the probable SINR for its desired signal reception and correspondingly signals/indicates to the transmitting non-AP STA about which MCS and TX power to use.
ii. DL < UL: The STR capable AP MLD 14 selects a lower MCS and an appropriate TX power such that the transmitting non-AP STA can use a higher MCS with an appropriate TX power.
iii. DL ~ UL: The STR capable AP MLD 14 determines to select similar MCS along with appropriate TX powers for itself and the transmitting non-AP STA (e.g., non-AP MLD 16).

It is noted that above signaling steps may be appropriately adapted when a STR capable AP MLD 14 determines to perform STR MLO while communicating with more than two non-AP STAs affiliated with different devices that may or may not be MLDs.

### Example 3: Opportunistic STR

In the above two examples the target may be to ensure that STR MLO can be achieved. This may then effectively be performed by reducing the supported data rate in one of the links or both links in the pair of links. There may be situations when the cost of enabling STR by reducing the data rate is quite high. One such situation is when the data traffic is highly asymmetric, i.e., when there is much more data going in one of the directions. In some embodiments, an approach is described which may be refer to as opportunistic STR. The general idea is to treat the links, and then especially the one carrying the larger part of the data, as if they would be STR although they are not - thus, the link is used opportunistically. Most often this may be a successful approach as there is usually no data in the other direction. At the few occasions when there in fact is data in the other direction, the high data rate link will fail but the other link is designed to work. If e.g., the high data rate link is the DL and the UL only has data to send 1% of the time, it means that the efficiency of the DL will be around 99%. On the other hand, since the data rate in the UL is so low the most robust MCS may be used in this low data rate link, without a large absolute cost in terms of airtime. With a robust MCS, this UL may be made to work, so that even if there is constant data transmission in the DL, it may be ensured that the delay for UL access is minimized.

In some embodiments, a first link in the pair of radio links is associated with a first data load and a second link in the pair of radio links is associated with a second data load, where the first data load is greater than the second data load. In such embodiments or scenarios, the AP MLD 14 may select value of a communication parameter (e.g., MCS) for the first link assuming no data load on the second link. The general idea may be that the first link will be established and used for its data/traffic load (ignoring that the first link may not work if traffic is actually transmitted on the second link). For example, a high MCS may be used on the first link, although it is accepted that it may likely fail if there is activity on the second link.

In some embodiments, since the delay for the DL may not be a problem due to the very limited UL traffic, this approach with an opportunistic STR approach may result in very efficient use of the link/channel in terms of throughput, while still being able to support low latency applications in both directions.

### Example Application

An example of usage of some embodiments of the present disclosure may be STR MLO initiated and driven by a STR capable AP MLD 14. When a STR capable AP MLD 14 determines to setup a STR MLO with a STR capable non-AP MLD 16 using links/channels identified to be available, the AP MLD 14 may use the proposed signaling based approach to obtain information about capabilities of the STR capable non-AP MLD 16 corresponding to those links/channels. Once the STR capabilities are obtained, received and/or determined, the AP MLD 14 may select values of one or more appropriate communication parameters as described throughout this disclosure. In some embodiments, the AP MLD 14 may select values of one or more appropriate communication parameters depending upon, for example, the UL/ DL traffic on the links and/or quality of service requirements, etc. Such signaling and parameter selection by the STR capable AP MLD 14 is illustrated below, as an example:
• Suppose that two 20 MHz links/channels have been identified to be available by the STR capable AP MLD 14 for potential STR MLO. Also, suppose that the PL estimate computed by the STR capable AP MLD 14 is 70 dB.
• The STR capable AP MLD 14 requests the STR capable non-AP MLD 16 to provide maximum TX powers and SI suppressions corresponding to its supported MCSs in the two specific links/channels corresponding to 20 MHz signal BW. The STR capable non-AP MLD 16 provides the following information given in Table 1.

**Table 1. Information provided by STR capable non-AP MLD 16.**

| STR capable Non-AP MLD MCS | STR capable Non-AP MLD Maximum TX power (dBm) | STR capable Non-AP MLD SI Suppression (dB) |
|---|---|---|
| 0, 1, 2 | 15 | 75 |
| 3, 4 | 13.5 | 78 |
| 5, 6, 7 | 12 | 81 |
| 8, 9 | 10.5 | 84 |
| 10, 11 | 9 | 87 |

• Suppose the STR capable AP MLD 14 has the following information about its own capabilities given in Table 2.

**Table 2. Information known by STR capable AP MLD 14.**

| STR capable AP MLD MCS | STR capable AP MLD Maximum TX power (dBm) | STR capable AP MLD SI Suppression (dB) |
|---|---|---|
| 0, 1, 2 | 16 | 85 |
| 3, 4 | 14.5 | 90 |
| 5, 6, 7 | 13 | 95 |
| 8, 9 | 11.5 | 100 |
| 10, 11 | 10 | 105 |

• The STR capable AP MLD 14 has the following information about the approximate minimum required SINR for successful reception of signals with different MCSs as shown in Table 3.

**Table 3. Approximate minimum required SINR for different MCSs.**

| MCS | Approximate minimum required SINR (dB) | MCS | Approximate minimum required SINR (dB) |
|---|---|---|---|
| 0 | 0 | 6 | 17 |
| 1 | 2 | 7 | 18 |
| 2 | 5 | 8 | 22 |
| 3 | 8 | 9 | 24 |
| 4 | 10 | 10 | 28 |
| 5 | 15 | 11 | 30 |

• Using the information available to it from Tables 1-3 above, the STR capable AP MLD 14 makes the following selections for TX powers and MCSs based on the DL versus (vs) UL traffic scenario:
i. DL > UL: STR capable AP MLD 14 selects MCS=5 and TX power=13 dBm for itself, MCS=2 and TX power=0 dBm for STR capable non-AP MLD 16. The resultant SIR (~SINR) at the STR capable non-AP MLD 16 is (13-70)-(0-75)=18 dB, the SIR (~SINR) at the STR capable AP MLD 14 is (0-70)-(13-95)=12 dB. Based on Table 3, it can be noted that these resultant SIRs (~SINRs) may be sufficient for successful desired signal reception at both devices.
ii. DL < UL: STR capable AP MLD 14 selects MCS=4 and TX power=7 dBm for itself, MCS=8 and TX power=10 dBm for STR capable non-AP MLD 16. Results in SIR (~SINR) at the STR capable non-AP MLD 16 is (7-70)-(10-84)=11 dB, SIR (~SINR) at the STR capable AP MLD 14 is (10-70)-(7-90)=23 dB. Based on Table 3, it can be noted that these resultant SIRs (~SINRs) may be sufficient for successful desired signal reception at both devices.
iii. DL ~ UL: STR capable AP MLD 14 selects MCS=4 and TX power=10 dBm for itself, MCS=4 and TX power=7 dBm for STR capable non-AP MLD 16. Results in SIR (~SINR) at the STR capable non-AP MLD 16 is (10-70)-(7-78)=11 dB, SIR (~SINR) at the STR capable AP MLD 14 is (7-70)-(10-90)=17 dB. Based on Table 3, it can be noted that these resultant SIRs (~SINRs) would be sufficient for successful desired signal reception at both devices.

Some embodiments to support STR multi-link operation have been disclosed. In some embodiments, a method for enabling STR MLO between two devices using two different links is provided. In some embodiments, the method may be characterized in that the second device provides the first device with information related to what requirements are to be fulfilled at the second device for STR to be feasible/enabled and that the first device uses this information to select values of communication parameters such as, for example, TX powers for the two links to enable STR.

In some further embodiments, the first device selects MCSs for the two links. In some further embodiments, the selecting of the MCSs for the two links also takes the load in the two links into account when selecting the MCSs. In some embodiments, the provided information also includes how much SI is caused by a transmission for at least two different TX powers. In some embodiments, the provided information also indicates how the signal bandwidth of the links impacts the SI suppression.

Some embodiments may provide a method for enabling MLO for highly asymmetric data load. In some embodiments, the method may be characterized in that the link with the higher data load is using an MCS optimized for the situation that there is no data transmitted in the other link, and where the TX power and MCS for the link with the smaller data load is selected such that when there is data, the reception on the high data link will not work, but the reception on the low data rate will work with a high probability to be successful.

| Abbreviation | Explanation |
|---|---|
| AP | Access Point |
| BW | Bandwidth |
| DL | Downlink |
| EHT | Extremely High Throughput |
| MCS | Modulation and Coding Scheme |
| ML | Multi-Link |
| MLD | Multi-Link Device |
| MLO | Multi-Link Operation |
| OFDMA | Orthogonal Frequency Division Multiple Access |
| PL | Path Loss |
| RX | Receive or Receiver |
| SIR | Signal-to-Interference Ratio |
| SINR | Signal-to-Interference-plus-Noise Ratio |
| STA | Station |
| TGbe | IEEE 802.11be Task Group |
| TX | Transmit or Transmitter |
| UL | Uplink |

As will be appreciated by one of skill in the art, the concepts described herein may be embodied as a method, data processing system, and/or computer program product. Accordingly, the concepts described herein may take the form of an entirely hardware embodiment, an entirely software embodiment or an embodiment combining software and hardware aspects all generally referred to herein as a "circuit" or "module." Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks. It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A method implemented in a simultaneous transmit and receive, STR, capable multi-link device, MLD (14), comprising an access point, AP, station, STA, the method comprising:
selecting (S100) at least one communication parameter value for a pair of radio links to enable STR on the pair of radio links between the MLD (14) and a second MLD (16), the second MLD (16) comprising a non-access point, non-AP, STA, and the selected at least one communication parameter value comprising a value of at least one of: at least one first communication parameter for a first link in the pair and at least one second communication parameter for a second link in the pair;
wherein the selection is based at least in part on an amount of frequency separation between each link in the pair of links.

2. The method of Claim 1, wherein the at least one communication parameter value comprises a value of at least one of:
a transmit power for the first link in the pair of radio links;
a transmit power for the second link in the pair of radio links;
a modulation and coding scheme, MCS, for the first link;
a MCS for the second link; and
a signal bandwidth for at least one of the first link and the second link.

3. The method of any one of Claims 1 and 2, further comprising:
obtaining information about the pair of radio links, the information pertaining to at least one of the MLD's capabilities and the second MLD's capabilities for the pair of radio links.

4. A method implemented in a simultaneous transmit and receive, STR, capable multi-link device, MLD (16), comprising a non-access point, non-AP, station, STA, the method comprising:
transmitting (S102) information about a pair of radio links to a second MLD (14); and
performing (S104) a multi-link operation, MLO, on the pair of radio links between the MLD (16) and the second MLD (14), the pair of radio links using at least one communication parameter value, the at least one communication parameter value being based at least in part on the transmitted information and the at least one communication parameter value comprising a value of at least one of: at least one first communication parameter for a first link in the pair and at least one second communication parameter for a second link in the pair;
wherein the at least one communication parameter value is based at least in part on an amount of frequency separation between each link in the pair of links.

5. The method of Claim 4, wherein the at least one communication parameter value is based at least in part on the transmitted information to enable STR on the pair of radio links.

6. The method of any one of Claims 4 and 5, further comprising:
receiving an indication of the at least one communication parameter value to use for the pair of radio links from the second MLD (14).

7. The method of any one of Claims 4-6, wherein the at least one communication parameter value comprises a value of at least one of:
a transmit power for the first link in the pair of radio links;
a transmit power for the second link in the pair of radio links;
a modulation and coding scheme, MCS, for the first link;
a MCS for the second link; and
a signal bandwidth for at least one of the first link and the second link.

8. The method of any one of Claims 4-7, wherein the at least one communication parameter value is based at least in part on a comparison of the transmitted information pertaining to the MLD's capabilities to information pertaining to the second MLD's capabilities in order to enable the STR on the pair of radio links.

9. The method of any one of Claims 4-8, further comprising:
receiving a request for information about the pair of radio links from the second MLD (14), the transmission of the information about the pair of radio links being responsive to the received request.

10. The method of any one of Claims 4-9, further comprising:
reclassifying the pair of radio links from non-STR to STR based at least in part on the at least one communication parameter value.

11. The method of any one of Claims 4-10, wherein at least one of:
the pair of radio links is a STR constrained pair of links; and
the pair of radio links is a pair of non-STR links for a first set of communication parameter values and the pair of radio links is a pair of STR links for a second set of communication parameter values, the first set being different from the second set.

12. A simultaneous transmit and receive, STR, capable multi-link device, MLD, comprising an access point, AP, station, STA, the MLD (14) comprising processing circuitry (24), the processing circuitry (24) configured to cause the MLD (14) to:
select at least one communication parameter value for a pair of radio links to enable STR on the pair of radio links between the MLD (14) and a second MLD (16), the second MLD (16) comprising a non-access point, non-AP, STA, and the selected at least one communication parameter value comprising a value of at least one of: at least one first communication parameter for a first link in the pair and at least one second communication parameter for a second link in the pair;
wherein the selection is based at least in part on an amount of frequency separation between each link in the pair of links.

13. The MLD of claim 12, wherein the processing circuitry (24) is further configured to cause the MLD to perform the method of claim 2 or 3.

14. A simultaneous transmit and receive, STR, capable multi-link device, MLD (16), comprising a non-access point, non-AP, station, STA, the MLD (16) comprising processing circuitry (32), the processing circuitry (32) configured to cause the MLD (16) to:
transmit information about a pair of radio links to a second MLD (14); and
perform a multi-link operation, MLO, on the pair of radio links between the MLD (16) and the second MLD (14), the pair of radio links using at least one communication parameter value, the at least one communication parameter value being based at least in part on the transmitted information and the at least one communication parameter value comprising a value of at least one of: at least one first communication parameter for a first link in the pair and at least one second communication parameter for a second link in the pair;
wherein the at least one communication parameter value is based at least in part on an amount of frequency separation between each link in the pair of links.

15. The MLD of claim 14, wherein the processing circuitry (32) is further configured to cause the MLD (16) to perform the method of any one of claims 5 to 11.

## Patentansprüche

1. Verfahren, das in einer Mehrfachverbindungsvorrichtung, MLD (14), die imstande ist, gleichzeitig zu senden und zu empfangen, STR, implementiert wird, die eine Zugangspunkt-, AP-Station, STA, umfasst, wobei das Verfahren umfasst:
Auswählen (S100) mindestens eines Kommunikationsparameterwerts für ein Paar von Funkverbindungen, um STR auf dem Paar von Funkverbindungen zwischen der MLD (14) und einer zweiten MLD (16) zu aktivieren, wobei die zweite MLD (16) einen Nicht-Zugangspunkt, Nicht-AP, STA, umfasst und der ausgewählte mindestens eine Kommunikationsparameterwert einen Wert von mindestens einem umfasst von: mindestens einem ersten Kommunikationsparameter für eine erste Verbindung in dem Paar und mindestens einem zweiten Kommunikationsparameter für eine zweite Verbindung in dem Paar;
wobei die Auswahl mindestens teilweise auf einem Betrag einer Frequenztrennung zwischen jeder Verbindung in dem Paar von Verbindungen basiert.

2. Verfahren nach Anspruch 1, wobei der mindestens eine Kommunikationsparameterwert einen Wert von mindestens einem umfasst von:
Sendeleistung für die erste Verbindung in dem Paar von Funkverbindungen;
Sendeleistung für die zweite Verbindung in dem Paar von Funkverbindungen;
Modulations- und Codierungsschema, MCS, für die erste Verbindung;
MCS für die zweite Verbindung; und
Signalbandbreite für mindestens eine der ersten Verbindung und der zweiten Verbindung.

3. Verfahren nach einem der Ansprüche 1 und 2, weiter umfassend:
Erhalten von Informationen über das Paar von Funkverbindungen, wobei sich die Informationen auf mindestens eine der Fähigkeiten der MLD und die Fähigkeiten der zweiten MLD für das Paar von Funkverbindungen beziehen.

4. Verfahren, das in einer Mehrfachverbindungsvorrichtung, MLD (16), die imstande ist, gleichzeitig zu senden und zu empfangen, STR, implementiert wird, die eine Nicht-Zugangspunkt-, Nicht-AP-Station, STA, umfasst, wobei das Verfahren umfasst:
Senden (S102) von Informationen über ein Paar von Funkverbindungen an eine zweite MLD (14); und
Durchführen (S104) eines Mehrfachverbindungsvorgangs, MLO, auf dem Paar von Funkverbindungen zwischen der MLD (16) und der zweiten MLD (14), wobei das Paar von Funkverbindungen mindestens einen Kommunikationsparameterwert verwendet, der mindestens eine Kommunikationsparameterwert mindestens teilweise auf den gesendeten Informationen basiert und der mindestens eine Kommunikationsparameterwert einen Wert von mindestens einem umfasst von: mindestens einem ersten Kommunikationsparameter für eine erste Verbindung in dem Paar und mindestens einem zweiten Kommunikationsparameter für eine zweite Verbindung in dem Paar;
wobei der mindestens eine Kommunikationsparameterwert mindestens teilweise auf einem Betrag einer Frequenztrennung zwischen jeder Verbindung in dem Paar von Verbindungen basiert.

5. Verfahren nach Anspruch 4, wobei der mindestens eine Kommunikationsparameterwert mindestens teilweise auf den gesendeten Informationen basiert, um STR auf dem Paar von Funkverbindungen zu aktivieren.

6. Verfahren nach einem der Ansprüche 4 und 5, weiter umfassend:
Empfangen einer Angabe des mindestens einen zu verwendenden Kommunikationsparameterwerts für das Paar von Funkverbindungen von der zweiten MLD (14).

7. Verfahren nach einem der Ansprüche 4-6, wobei der mindestens eine Kommunikationsparameterwert einen Wert von mindestens einem umfasst von:
Sendeleistung für die erste Verbindung in dem Paar von Funkverbindungen;
Sendeleistung für die zweite Verbindung in dem Paar von Funkverbindungen;
Modulations- und Codierungsschema, MCS, für die erste Verbindung;
MCS für die zweite Verbindung; und
Signalbandbreite für mindestens eine der ersten Verbindung und der zweiten Verbindung.

8. Verfahren nach einem der Ansprüche 4-7, wobei der mindestens eine Kommunikationsparameterwert mindestens teilweise auf einem Vergleich der gesendeten Informationen, die sich auf Fähigkeiten der MLD beziehen, mit Informationen, die sich auf die Fähigkeiten der zweiten MLD beziehen, basiert, um den STR auf dem Paar von Funkverbindungen zu aktivieren.

9. Verfahren nach einem der Ansprüche 4-8, weiter umfassend:
Empfangen einer Anforderung von Informationen über das Paar von Funkverbindungen von der zweiten MLD (14), wobei das Senden der Informationen über das Paar von Funkverbindungen als Reaktion auf die empfangene Anforderung erfolgt.

10. Verfahren nach einem der Ansprüche 4-9, weiter umfassend:
Neuklassifizieren des Paares von Funkverbindungen von Nicht-STR auf STR, mindestens teilweise basierend auf dem mindestens einen Kommunikationsparameterwert.

11. Verfahren nach einem der Ansprüche 4-10, wobei mindestens eines gilt von:
das Paar von Funkverbindungen ist ein STR-beschränktes Paar von Verbindungen; und
das Paar von Funkverbindungen ist ein Paar von Nicht-STR-Verbindungen für einen ersten Satz von Kommunikationsparameterwerten und das Paar von Funkverbindungen ist ein Paar von STR-Verbindungen für einen zweiten Satz von Kommunikationsparameterwerten, wobei sich der erste Satz vom zweiten Satz unterscheidet.

12. Mehrfachverbindungsvorrichtung, MLD, die imstande ist, gleichzeitig zu senden und zu empfangen, STR, die eine Zugangspunkt-, AP-Station, STA, umfasst, wobei die MLD (14) eine Verarbeitungsschaltung (24) umfasst, wobei die Verarbeitungsschaltung (24) konfiguriert ist, um die MLD (14) zu veranlassen:
mindestens einen Kommunikationsparameterwert für ein Paar von Funkverbindungen auszuwählen, um STR auf dem Paar von Funkverbindungen zwischen der MLD (14) und einer zweiten MLD (16) zu aktivieren, wobei die zweite MLD (16) einen Nicht-Zugangspunkt, Nicht-AP, STA, umfasst und der ausgewählte mindestens eine Kommunikationsparameterwert einen Wert von mindestens einem umfasst von: mindestens einem ersten Kommunikationsparameter für eine erste Verbindung in dem Paar und mindestens einem zweiten Kommunikationsparameter für eine zweite Verbindung in dem Paar;
wobei die Auswahl mindestens teilweise auf einem Betrag einer Frequenztrennung zwischen jeder Verbindung in dem Paar von Verbindungen basiert.

13. MLD nach Anspruch 12, wobei die Verarbeitungsschaltung (24) weiter konfiguriert ist, um die MLD zu veranlassen, das Verfahren nach Anspruch 2 oder 3 auszuführen.

14. Mehrfachverbindungsvorrichtung, MLD (16), die imstande ist, gleichzeitig zu senden und zu empfangen, STR, die eine Nicht-Zugangspunkt-, Nicht-AP-Station, STA, umfasst, wobei die MLD (16) eine Verarbeitungsschaltung (32) umfasst, wobei die Verarbeitungsschaltung (32) konfiguriert ist, um die MLD (16) zu veranlassen:
Informationen über ein Paar von Funkverbindungen an eine zweite MLD (14) zu senden; und
einen Mehrfachverbindungsvorgang, MLO, auf dem Paar von Funkverbindungen zwischen der MLD (16) und der zweiten MLD (14) durchzuführen, wobei das Paar von Funkverbindungen mindestens einen Kommunikationsparameterwert verwendet, der mindestens eine Kommunikationsparameterwert mindestens teilweise auf den gesendeten Informationen basiert und der mindestens eine Kommunikationsparameterwert einen Wert von mindestens einem von mindestens einem ersten Kommunikationsparameter für eine erste Verbindung in dem Paar und mindestens einem zweiten Kommunikationsparameter für eine zweite Verbindung in dem Paar umfasst;
wobei der mindestens eine Kommunikationsparameterwert mindestens teilweise auf einem Betrag einer Frequenztrennung zwischen jeder Verbindung in dem Paar von Verbindungen basiert.

15. MLD nach Anspruch 14, wobei die Verarbeitungsschaltung (32) weiter konfiguriert ist, um die MLD (16) zu veranlassen, das Verfahren nach einem der Ansprüche 5 bis 11 durchzuführen.

## Revendications

1. Procédé mis en œuvre dans un dispositif multi-liaison, MLD (14), qui permet une transmission et une réception simultanées, STR, comprenant une station, STA, de point d'accès, AP, le procédé comprenant :
la sélection (S100) d'au moins une valeur de paramètre de communication pour une paire de liaisons radio pour activer la STR sur la paire de liaisons radio entre le MLD (14) et un second MLD (16), le second MLD (16) comprenant une STA non-point d'accès, non-AP, et la au moins une valeur de paramètre de communication sélectionnée comprenant une valeur d'au moins un : d'au moins un premier paramètre de communication pour une première liaison de la paire et d'au moins un second paramètre de communication pour une seconde liaison de la paire ;
dans lequel la sélection est basée, au moins en partie, sur une quantité de séparation de fréquence entre chaque liaison de la paire de liaisons.

2. Procédé selon la revendication 1, dans lequel la au moins une valeur de paramètre de communication comprend une valeur d'au moins un :
d'une puissance de transmission pour la première liaison de la paire de liaisons radio ;
d'une puissance de transmission pour la seconde liaison de la paire de liaisons radio ;
d'un schéma de modulation et de codage, MCS, pour la première liaison ;
d'un MCS pour la seconde liaison ; et
d'une bande passante de signal pour au moins une de la première et de la seconde liaison.

3. Procédé selon l'une quelconque des revendications 1 à 2, comprenant en outre :
l'obtention d'informations concernant la paire de liaisons radio, les informations se rapportant à au moins une des capacités du MLD et des capacités du second MLD pour la paire de liaisons radio.

4. Procédé mis en œuvre dans un dispositif multi-liaison, MLD (16), qui permet une transmission et une réception simultanées, STR, comprenant une station, STA, de non-point d'accès, non-AP, le procédé comprenant :
la transmission (S102) d'informations concernant une paire de liaisons radio à un second MLD (14) ; et
la réalisation (S104) d'une opération multi-liaison, MLO, sur la paire de liaisons radio entre le MLD (16) et le second MLD (14), la paire de liaisons radio utilisant au moins une valeur de paramètre de communication, la au moins une valeur de paramètre de communication étant basée, au moins en partie, sur les informations transmises et la au moins une valeur de paramètre de communication comprenant une valeur d'au moins un : d'au moins un premier paramètre de communication pour une première liaison de la paire et d'au moins un second paramètre de communication pour une seconde liaison de la paire ;
dans lequel la au moins une valeur de paramètre de communication est basée, au moins en partie, sur une quantité de séparation de fréquence entre chaque liaison de la paire de liaisons.

5. Procédé selon la revendication 4, dans lequel la au moins une valeur de paramètre de communication est basée, au moins en partie, sur les informations transmises pour activer la STR sur la paire de liaisons radio.

6. Procédé selon l'une quelconque des revendications 4 à 5, comprenant en outre :
la réception d'une indication de la au moins une valeur de paramètre de communication à utiliser pour la paire de liaisons radio à partir du second MLD (14).

7. Procédé selon l'une quelconque des revendications 4-6, dans lequel la au moins une valeur de paramètre de communication comprend une valeur d'au moins un :
d'une puissance de transmission pour la première liaison de la paire de liaisons radio ;
d'une puissance de transmission pour la seconde liaison de la paire de liaisons radio ;
d'un schéma de modulation et de codage, MCS, pour la première liaison ;
d'un MCS pour la seconde liaison ; et
d'une bande passante de signal pour au moins une de la première et de la seconde liaison.

8. Procédé selon l'une quelconque des revendications 4-7, dans lequel la au moins une valeur de paramètre de communication est basée, au moins en partie, sur une comparaison des informations transmises concernant les capacités du MLD avec des informations concernant les capacités du second MLD afin d'activer la STR sur la paire de liaisons radio.

9. Procédé selon l'une quelconque des revendications 4-8, comprenant en outre :
la réception d'une demande d'informations concernant la paire de liaisons radio du second MLD (14), la transmission des informations concernant la paire de liaisons radio étant en réponse à la demande reçue.

10. Procédé selon l'une quelconque des revendications 4-9, comprenant en outre :
la reclassification de la paire de liaisons radio de non-STR à la STR sur la base, au moins en partie, de la au moins une valeur de paramètre de communication.

11. Procédé selon l'une quelconque des revendications 4-10, dans lequel au moins une :
de la paire de liaisons radio est une paire de liaisons à contrainte STR ; et
de la paire de liaisons radio est une paire de liaisons non-STR pour un premier ensemble de valeurs de paramètre de communication et la paire de liaisons radio est une paire de liaisons STR pour un second ensemble de valeurs de paramètres de communication, le premier ensemble étant différent du second ensemble.

12. Dispositif multi-liaison, MLD, qui permet une transmission et une réception simultanées, STR, comprenant une station, STA, de point d'accès, AP, le MLD (14) comprenant un ensemble de circuits de traitement (24), l'ensemble de circuits de traitement (24) étant configuré pour amener le MLD (14) à :
sélectionner au moins une valeur de paramètre de communication pour une paire de liaisons radio pour activer la STR sur la paire de liaisons radio entre le MLD (14) et un second MLD (16), le second MLD (16) comprenant une STA non-point d'accès, non-AP, et la au moins une valeur de paramètre de communication sélectionnée comprenant une valeur d'au moins un : d'au moins un premier paramètre de communication pour une première liaison de la paire et d'au moins un second paramètre de communication pour une seconde liaison de la paire ;
dans lequel la sélection est basée, au moins en partie, sur une quantité de séparation de fréquence entre chaque liaison de la paire de liaisons.

13. MLD selon la revendication 12, dans lequel l'ensemble de circuits de traitement (24) est en outre configuré pour amener le MLD à réaliser le procédé selon la revendication 2 ou 3.

14. Dispositif multi-liaison, MLD (16), qui permet une transmission et une réception simultanées, STR, comprenant une station, STA, de non-point d'accès, non-AP, le MLD (16) comprenant un ensemble de circuits de traitement (32), l'ensemble de circuits de traitement (32) étant configuré pour amener le MLD (16) à :
transmettre des informations concernant une paire de liaisons radio à un second MLD (14) ; et
effectuer une opération multi-liaison, MLO, sur la paire de liaisons radio entre le MLD (16) et le second MLD (14), la paire de liaisons radio utilisant au moins une valeur de paramètre de communication, la au moins une valeur de paramètre de communication étant basée, au moins en partie, sur les informations transmises et la au moins une valeur de paramètre de communication comprenant une valeur d'au moins un : d'au moins un premier paramètre de communication pour une première liaison de la paire et d'au moins un second paramètre de communication pour une seconde liaison de la paire ;
dans lequel la au moins une valeur de paramètre de communication est basée, au moins en partie, sur une quantité de séparation de fréquence entre chaque liaison de la paire de liaisons.

15. MLD selon la revendication 14, dans lequel l'ensemble de circuits de traitement (32) est en outre configuré pour amener le MLD (16) à réaliser le procédé selon l'une quelconque des revendications 5 à 11.
